# EUROPÄISCHE PATENTSCHRIFT

(11) **EP 0 609 795 B1**
(45) Veröffentlichungstag und Bekanntmachung des Hinweises auf die Patenterteilung: **11.12.1996**
(21) Anmeldenummer: 94101349.2
(22) Anmeldetag: 29.01.1994
(51) Int. Cl.: F16L 59/00, F01D 5/28, F02F 3/12

(54) **Wärmedämmschicht aus Keramik auf Metallbauteilen und Verfahren zu ihrer Herstellung**
Ceramic insulation layer on metallic piece parts and method of manufacture
Couche d'isolation thermique céramique sur éléments métalliques et procédé de manufacture

(30) Priorität: 04.02.1993 DE 4303135
(43) Veröffentlichungstag der Anmeldung: 10.08.1994
(73) Patentinhaber: MTU MOTOREN- UND TURBINEN-UNION MÜNCHEN GMBH, D-80976 München (DE)
(72) Erfinder: Bamberg, Joachim, Dr., D-8060 Dachau (DE); Steinhauser, Ludwig, D-8031 Maisach (DE); Bayer, Erwin, Dr., D-8060 Dachau (DE); Adam, Peter, Dr., D-8060 Dachau (DE)

(56) Entgegenhaltungen:
- EP-A- 0 132 667
- EP-A- 0 508 731
- DE-A- 2 754 460
- DE-A- 3 530 805
- FR-A- 2 559 212
- GB-A- 2 062 530
- GB-A- 2 080 147
- US-A- 4 159 357
- US-A- 4 405 660
- US-A- 4 576 874
- US-A- 4 880 614
- PATENT ABSTRACTS OF JAPAN vol. 10, no. 25 (M-450) (2082) 31. Januar 1986 & JP-A-60 182 341 (ISUZU JIDOSHA) 17. September 1985
- AEROSPACE AMERICA, Bd.25, Nr.5, 1. Mai 1987, NEW YORK Seiten 27 - 31 STEARNS 'Thermal-Barrier Coatings'
- TECHNIK HEUTE, Nr.2, 1987, KONSTANZ Seiten 39 - 45 BORMANN 'Neue Industriekeramik - kommt der wärmedichte Motor?'

## Beschreibung

Die Erfindung betrifft eine Wärmedämmschicht aus Keramik mit offenen inneren Oberflächen auf Metallbauteilen und ein Verfahren zu ihrer Herstellung.

Zum Schutz vor hohen Temperaturen und vor Heißgaskorrosion werden Metallbauteile mit keramischen Schichten belegt. Diese Schichten werden mittels Plasmaspritzen oder Bedampfen aufgebracht. Dabei entstehen herstellungsbedingt oder absichtlich Keramiken mit großen offenen inneren Oberflächen, z. B. offenen Korngrenzen. An diesen Oberflächen können durch thermische Belastung und heiße Gase chemische und physikalische Veränderungen auftreten, die zum Entstehen von weiteren Mikrorissen führen. Durch Rißfortschritt kann es schließlich zum völligen Versagen der Wärmedämmschichten kommen.

Ein weiterer Nachteil der keramischen Wärmedämmschichten mit offenen inneren Oberflächen ist, daß sie das Bauteil nicht wirksam vor Oxidation schützen können.

Dieser Stand der Technik ist aus der US-A-4 880 614 bekannt.

Aufgabe der Erfindung ist es, eine gattungsgemäße Wärmedämmschicht anzugeben, bei der die Bildung weiterer Mikrorisse und der Rißfortschritt behindert ist und das Bauteil sowie metallische Haftschichten zwischen der Wärmedämmschicht und den Metallbauteilen vor Oxidation besser geschützt sind.

Diese Aufgabe wird dadurch gelöst, daß die offenen inneren Oberflächen zur Veredelung der Wärmedämmschicht mit passivierenden Keramikschichten oder mit Metallabscheidungen belegt sind.

Mit dieser Belegung wird vorteilhaft die Korrosionsbeständigkeit, die Oxidationsfestigkeit, die Thermoschockbeständigkeit und die Zugfestigkeit von dem Schichtverbund Metallbauteil-Wärmedämmschicht erhöht. Mit der erfindungsgemäßen Veredelung von Wärmedämmschichten werden im Bereich von Mikrorissen, Grenzflächen und Poren Korrosions-, Segregations- und Sinterprozesse weitgehend unterbunden und damit weitere Mikrorißbildungen beim Betrieb des Metallbauteils vermieden, sodaß insgesamt die Lebensdauer des Bauteils mit Wärmedämmschicht verbessert wird.

In einer bevorzugten Ausbildung der Erfindung besteht die eingebrachte Keramikschicht aus Ceroxil oder stabilisiertem Zirkoniumdioxid. Diese Substanzen werden als nanokristalline Schwebeteilchen einer Flüssigkeit zu den offenen inneren Oberflächen der Wärmedämmschicht transportiert und lagern sich als Keramikschicht auf den inneren Oberflächen und Grenzschichten beim Verflüchtigen der Flüssigkeit ab. Das Ceroxid wird dabei in Form einer Dispersion über Kapillarkräfte in die Mikrorisse, Grenzflächen und Poren eingebracht. Nach dem Austreiben der Trägerflüssigkeit sind die inneren Oberflächen der Wärmedämmschicht mit einer passivierenden Ceroxidschicht belegt. Diese verhindert u. a. vorteilhaft, daß aggressive Heißgase die Wärmedämmschicht schädigen.

Metallabscheidungen in den Grenzflächen, offenen Poren und Mikrorissen umfassen vorzugsweise Ni, Co, Cr, Al, Pt oder Au oder Mischungen derselben. Durch diese Metallabscheidungen werden die Grenzflächen vorteilhaft passiviert und vor unerwünschten chemischen und physikalischen Beeinträchtigungen, insbesondere vor Oxidation geschützt.

Metalle werden vorzugsweise aus Lösungen von Metallen auf wässriger oder organischer Basis durch thermische Zersetzung oder Elektrolyse abgeschieden. Bevorzugte Lösungen sind Platinlösungen, aus denen vorteilhaft oxidationsbeständige Schichten abgeschieden werden. Die Metallabscheidung in den Grenzflächen hat darüber hinaus den Vorteil, daß die Vollständigkeit der Beschichtung der inneren Oberflächen der Wärmedämmschicht mittels Wirbelstrommessung zerstörungsfrei und schnell überprüft werden kann. Bei der elektrolytischen Abscheidung kann durch die Parameter Stromdichte und Dauer der Elektrolyse eine Metallisierung vorzugsweise nur im haftschichtnahen Bereich erreicht werden.

Eine bevorzugte Anwendung der Wärmedämmschicht ist ihr Einsatz als Schutzschicht für Triebwerkskomponenten im Heißgaskanal, vorzugsweise zur Beschichtung von Schaufeln und Mantelringsegmenten. Diese Verwendung hat den Vorteil, daß die Korrosionsbeständigkeit, die Oxidationsfestigkeit und die Thermoschockbeständigkeit der beschichteten Triebwerkskomponenten erhöht wird.

Eine weitere bevorzugte Anwendung der Wärmedämmschicht besteht in dem Schutz von Motorenkomponenten wie Kolben oder Ventilen, die erhöhten thermozyklischen Belastungen ausgesetzt sind.

Ein Verfahren zur Herstellung der Wärmedämmschicht umfaßt folgende Verfahrensschritte, nach Aufbringung einer metallischen Haftschicht wird ein Zirkoniumdioxidbasiswerkstoff als Wärmedämmschicht auf ein Metallbauteil aufgespritzt. Anschließend wird die Wärmedämmschicht mit einer Flüssigkeit, die eine passivierende Keramik in nanokristallinen Partikeln zur Ablagerung oder Metalle zur Abscheidung aus vorzugsweise organometallischen Verbindungen enthält, getränkt. Abschließend wird das Bauteil mit Wärmedämmschicht wärmebehandelt.

Dieses Verfahren hat den Vorteil, daß mit kostengünstigen Mitteln eine Veredelung der Wärmedämmschicht auch nachträglich möglich wird.

Zur Belegung der inneren Oberflächen mit Keramik wird vorzugsweise die Wärmedämmschicht mit einer Dispersion von nanokristallinem Ceroxid oder nanokristallinem, stabilisiertem Zirkoniumdioxid getränkt. Erst die Nanokristallinität der in der Dispersion enthaltenen Keramikpartikel gewährleistet vorteilhaft ein volltändiges und gleichmäßiges Belegen der inneren Oberflächen der Wärmedämmschicht mit Keramik, nach Verflüchtigung der flüssigen Phase der Dispersion und Wärmebehandlung des Bauteils mit Wärmedämmschicht.

Zur Belegung mit Metallen wird vorzugsweise die Wärmedämmschicht mit einer Metallsalzlösung auf wässriger Basis oder mit metallorganischen Verbindungen getränkt. Insbesondere zur Abscheidung von Platin wurden vorteilhaft platinorganische Verbindungen für das Tränken eingesetzt.

Eine weitere bevorzugte Durchführung des Verfahrens besteht in der Abscheidung des Metalls zur Veredelung der Wärmedämmschicht mittels Elektrolyse durch kathodische Reduktion des Metalls.

Durch die Dauer der Elektrolyse wird vorzugsweise der Abscheidungsort in der Wärmedämmschicht gesteuert, so daß vorzugsweise im haftschichtnahen Bereich der Wärmedämmschicht eine Metallablagerung erreicht werden kann, was besondere Vorteile beim Einsatz von Platin bewirkt, da die oxidationsgefährdete Haftschicht durch das Platin vor Oxidation geschützt wird.

Die Wirkung des Verfahrens ist um so größer, desto vollständiger und/oder schneller die inneren Grenzflächen belegt werden. Daher kommen bevorzugt Substanzen mit geringer Oberflächenspannung infrage, z. B. mikrokristalline Dispersionen oder Lösungen.

Die folgenden Beispiele sind bevorzugte Ausbildungen der Erfindung.

### Beispiel 1:

Zunächst wird nach Aufbringung einer metallischen Haftschicht aus MCrAlY eine 0,4 mm dicke yttriumoxidstabilisierte Zirkoniumdioxidschicht auf ein Bauteil aus einer Nickelbasislegierung mittels Plasmaspritzen aufgespritzt. Anschließend wird die Warmedämmschicht mit einer Dispersion aus einem organischen Lösungsmittel und nanokristallinem Ceroxidpulver 20 Stunden lang getränkt. Die mittlere Korngröße des Pulvers liegt bei 200 Nanometern. In einem Liter Flüssigkeit wurden zur Herstellung der Dispersion 200 g Ceroxidpulver dispergiert. Danach wird das Bauteil mit getränkter Wärmedämmschicht für 10 Minuten auf 500 °C erhitzt. Dabei verflüchtigt sich das Lösungsmittel und das Ceroxid bedeckt die inneren Oberflächen der Wärmedämmschicht. Die auf diese Weise veredelten Wärmedämmschichten zeigen eine 10-fach höhere Thermolastwechselbeständigkeit im Vergleich zu den unbehandelten Wärmedämmschichten.

### Beispiel 2:

Zunächst wird nach Aufbringung einer metallischen Haftschicht aus MCrAlY eine 0,4 mm dicke yttriumstabilisierte Zirkoniumdioxidschicht auf ein Bauteil aus einer Nickelbasislegierung mittels Plasmaspritzen aufgespritzt. Anschließend wird die Wärmedämmschicht mit einer Platinlösung auf wässriger Basis aus Platindiamindinitrit (10 g/l) getränkt (20 Stunden). Nach dem Trocknen an Luft wurde das Bauteil auf 500 °C erwärmt, wobei sich der Komplex zersetzt und die offenen Poren und Mikrorisse mit Platin belegt werden. Das auf diese Weise behandelte Bauteil wurde Thermolastwechselversuchen ausgesetzt. Es wurde festgestellt, daß die platinierten Wärmedämmschichten eine wesentlich höhere Thermolastwechselbeständigkeit besitzen als nicht platinierte Wärmedämmschichten (über Faktor 20). Ferner konnte festgestellt werden, daß sich der Temperatur-Leitwert meßbar nicht vermindert hat. Die Vollständigkeit der Infiltration der Wärmedämmschicht mit Platin wurde mittels Metallographie überprüft. Auch mit Platinlösungen auf organischer Basis konnte ein positives Ergebnis erzielt werden.

### Beispiel 3:

Auch hier wird nach der Aufbringung einer metallischen Haftschicht aus MCrAlY eine 0,4 mm dicke yttriumstabilisierte Zirkondioxidschicht auf ein Bauteil aus einer Nickelbasislegierung mittels Plasmaspritzen aufgetragen. Anschließend wird das beschichtete Bauteil in eine 1,5 molare Kupfersulfatlösung getaucht und für eine Elektrolyse bei einer Stromdichte von 0,1 A/cm und einer Dauer von 20 Minuten als Kathode geschaltet.

Auf diese Weise wird erreicht, daß eine Belegung der Poren und Mikrorisse im gesamten Bereich der Wärmedämmschicht stattfindet. Bei entsprechend kürzeren Elektrolysezeiten scheidet sich das Metall nur im haftschichtnahen Bereich ab.

Durch die Verwendung entsprechender Elektrolyte lassen sich auch andere Metalle wie z. B. Ni, Co, Cr, Al, Au oder Platin kathodisch abscheiden (Platin z. B. Platin-P-Salz). Dadurch kann vorteilhaft erreicht werden, daß die Haftschicht gegen Oxidation geschützt wird, ohne daß die Materialkennwerte der Wärmedämmschicht wesentlich verändert werden.

### Beispiel 4:

Zunächst wird nach Aufbringung einer metallischen Haftschicht aus MCrAlY eine 0,2 mm dicke yttriumstabilisierte Zirkonium dioxidschicht auf ein Bauteil aus einer Nickelbasislegierung mittels PVD-Technik aufgebracht. Anschließend wird die Wärmedämmschicht mit einer Platinlösung auf wässriger Basis aus Hexachloroplatin-(IV)-Säure infiltriert (8 Stunden). Nach dem Trocknen an der Luft wird das Bauteil auf 500 °C erwärmt, wobei sich die Hexachloroplatin-(IV)-Säure zersetzt und die Oberflächen der Kristallite der Wärmedämmschicht mit Platin belegen. Auf diese Weise vergütete PV-Wärmedämmschichten zeigten eine deutlich höhere Thermolastwechselbeständigkeit (über 300 %).

## Patentansprüche

1. Wärmedämmschicht aus Keramik mit offenen inneren Oberflächen auf Metallbauteilen, dadurch gekennzeichnet, daß die inneren Oberflächen zur Veredelung der Wärmedämmschicht mit passivierenden Keramikschichten oder mit Metallabscheidungen belegt sind.

2. Wärmedämmschicht nach Anspruch 1, dadurch gekennzeichnet, daß die passivierenden Keramikschichten aus Ceroxid oder stabilisiertem Zirkoniumdioxid bestehen.

3. Wärmedämmschicht nach Anspruch 1 oder 2, dadurch gekennzeichnet, daß die Metallabscheidungen Ni, Co, Cr, Al, Pt oder Au oder Mischungen derselben umfassen.

4. Anwendung der Wärmedämmschicht nach einem der Ansprüche 1 bis 3 als Schutzschicht für Triebwerkskomponenten oder Gasturbinenteile im Heißgaskanal, vorzugsweise zur Beschichtung von Schaufeln, Mantelringsegmenten, Brennkammern und Gehäusen.

5. Anwendung der Wärmedämmschicht nach einem der Ansprüche 1 - 3 als Schutzschicht auf Motorenkomponenten, z. B. Kolben oder Ventilen.

6. Verfahren zur Herstellung einer Wärmedämmschicht nach einem der Ansprüche 1 bis 5, dadurch gekennzeichnet, daß nach Aufbringung einer metallischen Haftschicht ein Zirkoniumoxidbasiswerkstoff als Wärmedämmschicht auf ein Metallbauteil aufgespritzt wird, anschließend die Wärmedämmschicht mit einer Flüssigkeit, die eine passivierende Keramik in nanokristallinen Partikeln zur Ablagerung oder Metalle zur Abscheidung vorzugsweise aus metallorganischen Verbindungen enthält, getränkt wird und abschließend Wärmedämmschicht und Bauteil wärmebehandelt werden.

7. Verfahren nach Anspruch 6, dadurch gekennzeichnet, daß die Wärmedämmschicht mit einer Dispersion von nanokristallinem Ceroxid oder nanokristallinem stabilisiertem Zirkoniumdioxid getränkt wird.

8. Verfahren nach Anspruch 6, dadurch gekennzeichnet, daß die Wärmedämmschicht mit einer Platinlösung auf wässriger oder organischer Basis getränkt wird.

9. Verfahren nach einem der Ansprüche 6 bis 8 , dadurch gekennzeichnet, daß Metalle zur Veredelung der Wärmedämmschicht in einer Elektrolyse durch kathodische Reduktion abgeschieden werden.

10. Verfahren nach einem der Ansprüche 6 bis 9, dadurch gekennzeichnet, daß als Metall Platin verwendet wird und durch die Dauer der Elektrolyse eine Abscheidung nur im haftschichtnahen Bereich erfolgt.

## Claims

1. Thermally-insulating ceramics layer having open inner surfaces on metal components, characterised in that the inner surfaces are covered with passivating ceramic layers or metal deposits for passivating the thermally-insulating layer.

2. Thermally-insulating layer according to claim 1, characterised in that the passivating ceramic layers are made of cerium oxide or stabilised zirconium dioxide.

3. Thermally-insulating layer according to claim 1 or 2, characterised in that the metal deposits include Ni, Co, Cr, Al, Pt or Au or mixtures of the same.

4. Use of the thermally-insulating layer according to one of claims 1 to 3 as a protective layer for engine components or gas turbine parts in a hot gas duct, preferably for coating blades, casing ring segments, combustion chambers and housings.

5. Use of the thermally-insulating layer according to one of claims 1 to 3 as a protective layer on engine components, e.g. pistons or valves.

6. Process for the production of a thermally-insulating layer according to one of claims 1 to 5, characterised in that after a metallic adhesive layer has been applied, a zirconium-oxide-based material is sprayed onto a metal component as the thermally-insulating layer, the thermally-insulating layer is then saturated with a fluid containing a passivating ceramic in nano-crystalline particles for precipitation, or metals for deposition preferably from metal-organic compounds, and finally the thermally-insulating layer and component are heat-treated.

7. Process according to claim 6, characterised in that the thermally-insulating layer is saturated with a dispersion of nano-crystalline cerium oxide or nano-crystalline stabilised zirconium dioxide.

8. Process according to claim 6, characterised in that the thermally-insulating layer is saturated with a platinum solution on an aqueous or organic base.

9. Process according to one of claims 6 to 8, characterised in that for passivating the thermally-insulating layer metals are deposited by cathodic reduction in electrolysis.

10. Process according to one of claims 6 to 9, characterised in that platinum is used as the metal and through the duration of the electrolysis deposition occurs only in the area near the adhesive layer.

## Revendications

1. Couche d'isolation thermique en céramique, avec des surfaces intérieures ouvertes, sur des éléments métalliques, caractérisée en ce que les surfaces intérieures sont recouvertes de couches céramiques à effet passivant ou de précipitations métalliques pour améliorer la couche d'isolation thermique.

2. Couche d'isolation thermique selon la revendication 1, caractérisée en ce que les couches céramiques à effet passivant sont en oxyde cérique ou en dioxyde de zirconium stabilisé.

3. Couche d'isolation thermique selon la revendication 1 ou 2, caractérisée en ce que les précipitations métalliques comportent des métaux tels que Ni, Co, Cr, Al, Pt ou Au ou bien des mélanges de ceux-ci.

4. Utilisation de la couche d'isolation thermique selon l'une des revendications 1 à 3 comme couche protectrice pour des éléments de moteur ou pour des pièces de turbine à gaz dans le canal de gaz chaud, de préférence pour recouvrir des ailettes, des segments frettés, des chambres de combustion et des carters.

5. Utilisation de la couche d'isolation thermique selon l'une des revendications 1 à 3 comme couche protectrice d'éléments de moteurs, par exemple des pistons ou des soupapes.

6. Procédé de fabrication d'une couche d'isolation thermique selon l'une des revendications 1 à 5, caractérisé en ce que, après avoir appliqué une couche adhérente métallique, on applique au pistolet sur un élément métallique un matériau de base d'oxyde de zirconium en tant que couche d'isolation thermique, on imprègne ensuite la couche d'isolation thermique avec un liquide qui contient une céramique à effet passivant sous forme de particules nanocristallines pour former un dépôt ou qui contient des métaux, de préférence des alliages organo-métalliques, pour la précipitation, et on soumet enfin la couche d'isolation thermique et l'élément à un traitement thermique.

7. Procédé selon la revendication 6, caractérisé en ce que l'on imprègne la couche d'isolation thermique par une dispersion d'oxyde cérique nanocristallin ou de dioxyde de zirconium stabilisé nanocristallin.

8. Procédé selon la revendication 6, caractérisé en ce que l'on imprègne la couche d'isolation thermique avec une solution de platine sur une base aqueuse ou organique.

9. Procédé selon l'une des revendications 6 à 8, caractérisé en ce que l'on précipite des métaux pour améliorer la couche d'isolation thermique dans une électrolyse par réduction cathodique.

10. Procédé selon l'une des revendications 6 à 9, caractérisé en ce que l'on utilise comme métal du platine et que l'on produit une précipitation seulement dans la zone proche de la couche adhérente en contrôlant la durée de l'électrolyse.
